# EUROPEAN PATENT APPLICATION

(11) **EP 2 862 660 A2**
(43) Date of publication of application: **22.04.2015**
(21) Application number: 14182593.5
(22) Date of filing: 28.08.2014
(51) Int. Cl.: B23H 7/10, B23H 1/10

(54) **Wire electric discharge machine with means for detecting fluid pressure**

(30) Priority: 21.10.2013 JP 2013218578
(71) Applicant: FANUC CORPORATION, Oshino-mura Minamitsuru-gun Yamanashi 401-0597 (JP)
(72) Inventor: Yamane, Hikaru, Minamitsuru-gun, Yamanashi 401-0597 (JP)
(74) Representative: Ward, James Norman

(57) **Abstract**

In a wire electric discharge machine, one end of a tube (31) filled with a pressure transmission medium is connected to a nozzle (9) and a pressure sensor (34) is attached to the other end of the tube by a joint outside a working fluid tank (4). The pressure sensor (34) is used to detect the pressure of a working fluid ejected from the nozzle (9).

## Description

### BACKGROUND OF THE INVENTION

### Field of the Invention

The present invention relates to a wire electric discharge machine with means for detecting the pressure of a working fluid in the vicinity of a nozzle.

### Description of the Related Art

In a wire electric discharge machine, a working fluid is introduced between a wire electrode and a workpiece by a nozzle. The value of the pressure of the working fluid ejected from the nozzle serves as an important index for various modes of control during machining, such as the maintenance of a stable machining state, detection of gaps between the nozzle and the workpiece, etc. In conventional wire electric discharge machines, the pressure of the working fluid is usually detected by means of a pressure sensor or the like installed in a pipe between the nozzle and a pump for discharging the working fluid.

Japanese Patent Application Laid-Open No. 10-43947 discloses a wire electric discharge machine in which the pressure of a working fluid in a pressure pocket of an upper working fluid supply nozzle is measured by a pressure sensor. Further, U.S. Patent No. 5,045,663 discloses a wire electric discharge machine in which the pressure of a working fluid is detected by a pressure sensor connected to a duct extending from a jet pump to a jet nozzle.

If the pressure sensor is installed in a working fluid passage at a distance from a working fluid supply nozzle, it sometimes cannot correctly detect the pressure of the working fluid ejected from the nozzle, due to a pressure loss caused by the resistance of the passage from the nozzle to the installation position of the pressure sensor.

In contrast, the pressure can be correctly detected if the pressure sensor is installed in the vicinity of the nozzle for ejecting the working fluid. Since the nozzle and its vicinity are located close to discharge points, however, the pressure sensor is liable to be affected by noise produced by electric discharge during machining. Thus, the pressure sensor cannot easily perform accurate pressure measurement. Further, the working fluid ejected from the nozzle or repelled by a workpiece produces a large splash. Thus, there is a problem that the pressure sensor must be waterproofed to avoid being affected by the splash of the working fluid.

### SUMMARY OF THE INVENTION

Accordingly, the present invention has been made to solve the above problems of the prior art, and it is an object of the invention to provide a wire electric discharge machine with an installation structure for a pressure sensor configured to accurately measure the pressure of a working fluid ejected from a nozzle and solve the problems of electric discharge noise and waterproof properties.

A wire electric discharge machine according to the present invention is configured so that a wire electrode is stretched between an upper head section supported by an upper head support portion and a lower head section supported by a lower head support portion and serves to machine a workpiece. The wire electric discharge machine includes: a working fluid tank for storing a working fluid or preventing the working fluid from scattering; a pump configured to force the working fluid into the working fluid tank; a working fluid passage extending between an outlet of the pump and an outlet of a nozzle for ejecting the working fluid; a fluid pressure transmission duct capable of transmitting a fluid pressure; a connection port which connects the working fluid passage and the fluid pressure transmission duct and which is provided at the upper head section, the lower head section, the upper head support portion, or the lower head support portion; and a pressure sensor attached, outside the working fluid tank, to one end of the fluid pressure transmission duct, the other end of which is connected to the connection port.

Each of the upper and lower head sections may comprise a wire guide portion supporting the wire electrode, a nozzle portion for ejecting the working fluid, a conductor portion configured to supply electricity to the wire electrode, and a working fluid duct portion for supplying the working fluid to the nozzle portion, the upper head support portion may comprise a member configured to move in the same direction as the upper head section as the upper head section is moved in a direction in which the wire electrode is stretched, and the lower head support portion may comprise a member which is disposed extending from outside the working fluid tank to the lower head section in order to move the lower head section relative to the workpiece.

According to the present invention, there can be provided a wire electric discharge machine with an installation structure for a pressure sensor configured to accurately measure the pressure of a working fluid ejected from a nozzle and solve the problems of electric discharge noise and waterproof properties.

### BRIEF DESCRIPTION OF THE DRAWINGS

The above and other objects and features of the present invention will be obvious from the ensuing description of embodiments with reference to the accompanying drawings, in which:
FIG. 1 is a view illustrating a schematic configuration of a wire electric discharge machine;
FIG. 2 is a view illustrating the configurations of an upper head section and an upper head support portion of the wire electric discharge machine shown in FIG. 1;
FIG. 3 is a view illustrating the configurations of a lower head section and a lower head support portion of the wire electric discharge machine shown in FIG. 1;
FIG. 4 is a cross-section view illustrating a working fluid passage in the upper head section and the upper head support portion;
FIG. 5 is a cross-section view illustrating a working fluid passage in the lower head section and the lower head support portion;
FIG. 6A is a view illustrating an embodiment in which a duct capable of transmitting the pressure of a working fluid is connected to a nozzle in the upper head section;
FIG. 6B is an enlarged view of a portion designated by numeral 29 in FIG. 6A;
FIG. 6C is an enlarged view, partially in section, of a portion designated by numeral 30 in FIG. 6A;
FIG. 7A is a view illustrating an embodiment in which an upper head support portion is provided directly with a duct capable of transmitting the pressure of a working fluid and a pressure sensor is attached to the upper head support portion;
FIG. 7B is a sectional view corresponding to FIG. 7A and illustrating the duct capable of transmitting the working fluid pressure;
FIG. 8A is a view illustrating an embodiment in which a duct capable of transmitting a fluid pressure is connected to an upper nozzle mounting portion in an upper head section;
FIG. 8B is a sectional view of the upper nozzle mounting portion shown in FIG. 8A;
FIG. 9A is a view illustrating an embodiment in which a duct capable of transmitting a fluid pressure is connected to a lower nozzle in a lower head section;
FIG. 9B is a top view of the lower head section 7 shown in FIG. 9A; and
FIG. 9C is an enlarged view of a pressure sensor mounting portion shown in FIG. 9A.

### DETAILED DESCRIPTION OF THE PREFERRED EMBODIMENTS

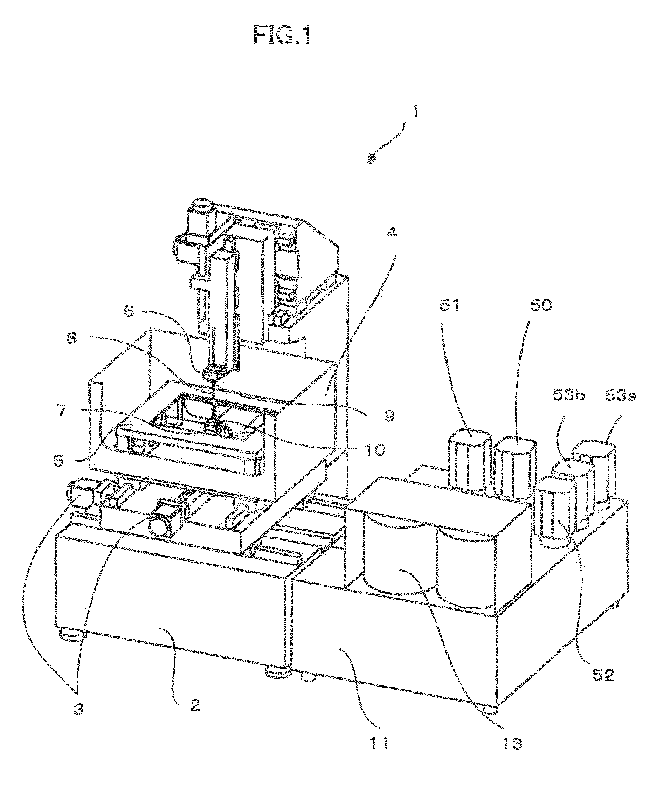

FIG. 1 is a view illustrating a schematic configuration of a wire electric discharge machine.

A working fluid tank 4 is disposed above a base 2 of a wire electric discharge machine 1 through a drive mechanism 3. A table 5 on which a workpiece (not shown) is removably secured is mounted in the working fluid tank 4. The drive mechanism 3, which is composed of a servomotor or the like, serves to move the working fluid tank 4 in two horizontal axial directions. Thus, electro-discharge machining is made to the workpiece so that it is machined into a desired shape as a wire electrode 8 stretched between upper and lower head sections 6 and 7 moves relative to the workpiece.

In normal wire electric discharge machining, a working fluid, such as water or oil, is stored in the working fluid tank 4, the workpiece is immersed in the working fluid, and the working fluid is ejected for machining through upper and lower nozzles 9 and 10 attached to the upper and lower head sections 6 and 7, respectively, in order to discharge sludge produced during the machining and cool the wire electrode 8. The upper and lower nozzles 9 and 10 are immersed in the working fluid during the electric discharge machining lest the fluid scatter.

Since the working fluid in the working fluid tank 4 is contaminated by the sludge produced during the machining, it is discharged into a sewage tank 11 through a drain outlet (not shown). The contaminated working fluid collected in the sewage tank 11 is pumped up by a filter pump 50 and delivered to a filter 13. The working fluid filtered by the filter 13 is collected in a clean fluid tank (not shown). A reservoir pump 51 pumps up the working fluid from the clean fluid tank and delivers it to the working fluid tank 4. A circulation pump 52 delivers the working fluid to a working fluid cooler (not shown) and an ionexchange resin (not shown), thereby adjusting the water temperature and specific resistance. A first working fluid pump 53a delivers the working fluid to the upper nozzle 9 so that the fluid is ejected from the upper nozzle 9. A second working fluid pump 53b delivers the working fluid to the lower nozzle 10 so that the fluid is ejected from the lower nozzle 10.

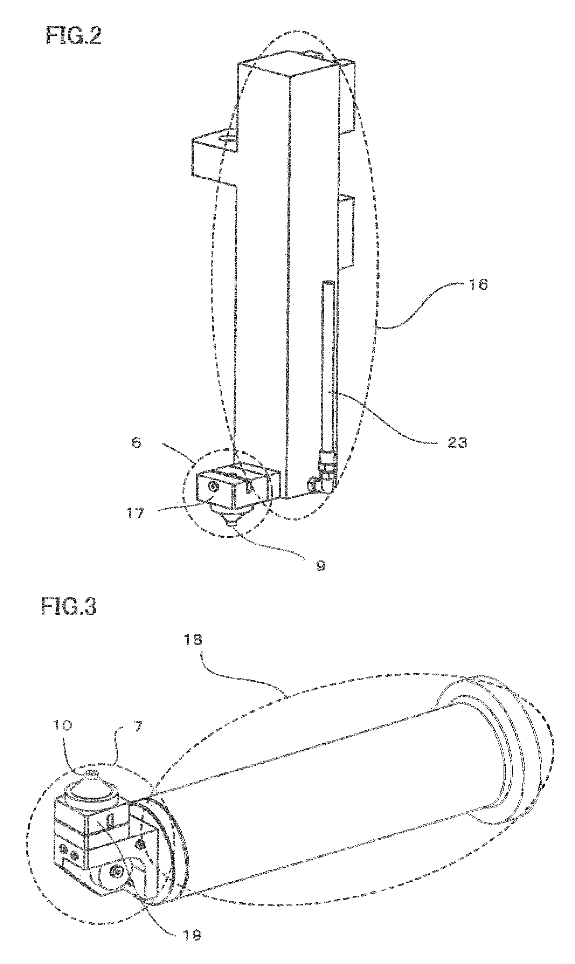

FIG. 2 is a view illustrating the configurations of the upper head section 6 and an upper head support portion 16 of the wire electric discharge machine shown in FIG. 1.

The upper head section 6 comprises the upper nozzle 9 and an upper nozzle mounting portion 17 on which the upper nozzle 9 is mounted. The upper head section 6 is mounted on the upper head support portion 16.

FIG. 3 is a view illustrating the configurations of the lower head section 7 and a lower head support portion 18 of the wire electric discharge machine shown in FIG. 1.

The lower head section 7 comprises the lower nozzle 10 and a lower nozzle mounting portion on which the lower nozzle 10 is mounted. The lower head section 7 is mounted on the lower head support portion 18.

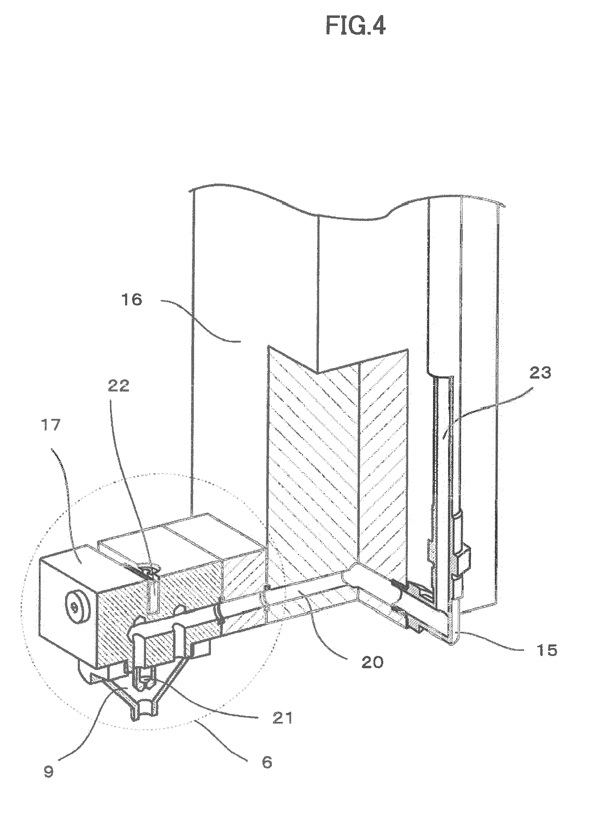

FIG. 4 is a cross-section view illustrating a working fluid passage 20 in the upper head section 6 and the upper head support portion 16.

An upper guide 21 is a member that supports the wire electrode 8. The wire electrode 8 is supplied with a machining current through a conductor 22. The working fluid forced by the pump 53a (FIG. 1) is guided up to the upper head support portion 16 by a working fluid hose 23, which forms a part of the working fluid passage 20. Finally, the working fluid is ejected from the upper nozzle 9 through the passage 20 in the upper head support portion 16 and the upper head section 6.

In FIG. 4, the working fluid hose 23 is connected to the working fluid passage 20 provided in the upper head support portion 16 by a joint 15. Alternatively, however, the hose 23 may be connected to the working fluid passage 20 provided in the upper head section 6 by a joint (not shown).

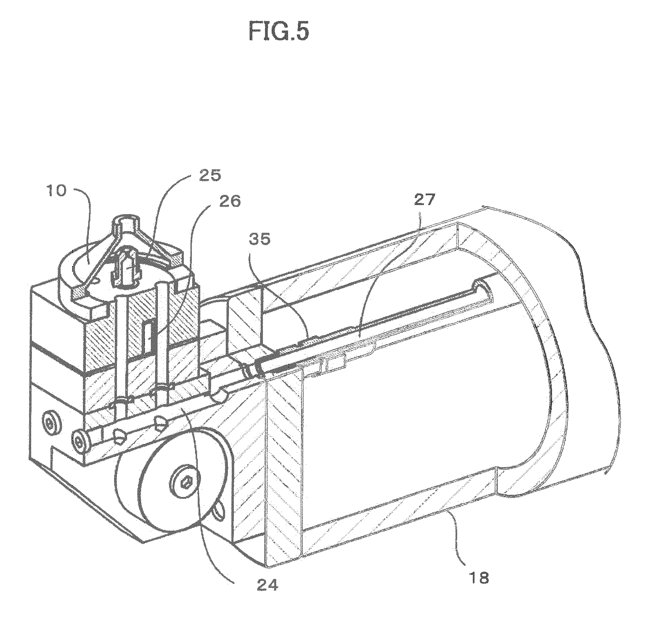

FIG. 5 is a cross-section view illustrating a working fluid passage 24 in the lower head section 7 and the lower head support portion 18.

A lower guide 25 is a member that supports the wire electrode 8. The wire electrode 8 is supplied with a machining current through a conductor 26. As in the case of the upper head section 6, the working fluid forced by the pump 53b (FIG. 1) is guided up to the lower head support portion 18 by a working fluid hose 27 and finally ejected from the lower nozzle 10 through the working fluid passage 24 provided in the lower head support portion 18 and the lower head section 7.

In FIG. 5, the working fluid hose 27 is connected to the working fluid passage 24 provided in the lower head support portion 18 by a joint 35. Alternatively, however, the hose 27 may be connected to the working fluid passage 24 provided in the lower head section 7 by a joint (not shown).

The configurations described above are the same as those of a conventional wire electric discharge machine. The influence of pressure losses in the working fluid passage 20 (FIG. 4) and the working fluid passage 24 (FIG. 5) increases with distance from the upper and lower nozzles 9 and 10. Thus, connection ports of a duct capable of transmitting the pressure of the working fluid forced by the pump are provided in positions (corresponding to the upper head section 6, upper head support portion 16, lower head section 7, and lower head support portion 18) relatively close to the upper and lower nozzles 9 and 10, where practically useful data can be obtained.

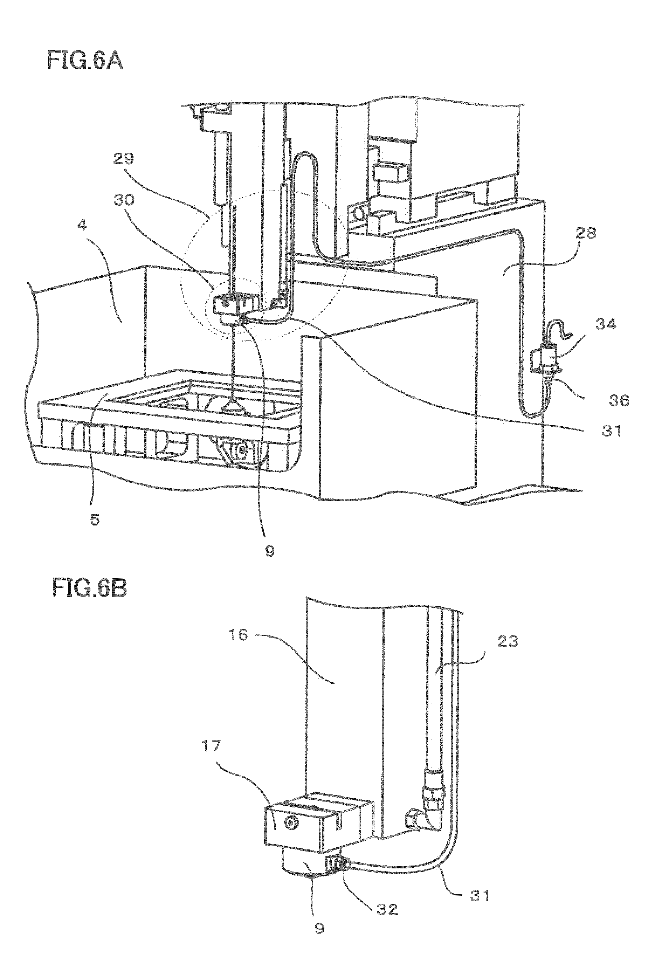

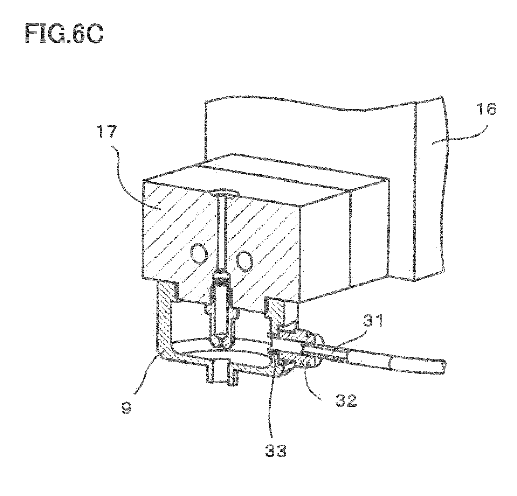

FIG. 6A is a view illustrating an embodiment in which the duct capable of transmitting the pressure of the working fluid is connected to the upper nozzle 9 at the upper head section 6. FIG. 6B is an enlarged view of a portion designated by numeral 29 in FIG. 6A. FIG. 6C is an enlarged view, partially in section, of a portion designated by numeral 30 in FIG. 6A.

In the embodiment of the present invention shown in FIGS. 6A to 6C, a tube 31 for transmitting the working fluid pressure to a pressure sensor 34 and a joint 32 for connecting one end of the tube 31 to the upper nozzle 9 are used to measure the working fluid pressure in the upper nozzle 9. The joint 32 is secured to the upper nozzle 9 by means of a threaded hole 33 provided in the upper nozzle 9.

As shown in FIG. 6A, the pressure sensor 34 is attached to the other end of the tube 31 by a joint 36. The pressure sensor 34 can detect the working fluid pressure in the upper nozzle 9 transmitted by a pressure transmission medium filled up in the tube 31.

In the wire electric discharge machine 1, discharge points and power cables constitute strong sources of noise. For accurate measurement of the working fluid pressure, therefore, it is essential to keep electronic devices, such as the pressure sensor, away from the noise sources as much as possible. Further, the electronic devices are seldom waterproof and are more costly than regular components if they are waterproof, so that they should be located as far from a part that tends to have contact with liquid as possible.

With the construction shown in FIGS. 6A to 6C, the installation position of the pressure sensor 34 can be freely selected by adjusting the length of the tube 31. Thus, the pressure sensor 34 can be installed at a distance from the noise sources and liquids, such as the working fluid, e.g., outside the working fluid tank 4.

The pressure transmission medium that fills the tube 31 may be any material that does not affect the accuracy of practical pressure measurement. The easiest way is to directly use air in the tube as the transmission medium. Alternatively, the tube 31 may be previously filled with the working fluid so that the fluid can be used as the pressure transmission medium. In another alternative method, both the working fluid and air are used for the same purpose.

Also, there is a method in which a duct of the joint 32 on the side of the upper nozzle 9 is covered with a thin diaphragm of metal or the like capable of transmitting the working fluid pressure and the joint 36 and the tube 31 on the side of the pressure sensor 34 are filled with degradation-resistant silicone oil or the like lest the joint 32 and the tube 31 attached to the upper nozzle 9 be closed by foreign matter in the working fluid. Further, the tube 31 may be of any material that does not affect the accuracy of practical pressure measurement. If leading of the tube 31 is to be minded, a highly flexible resin tube can be used as the tube 31. Furthermore, a metallic tube can be used if it is necessary to reduce degradation of the measurement accuracy by the expansion of the tube 31 or the like.

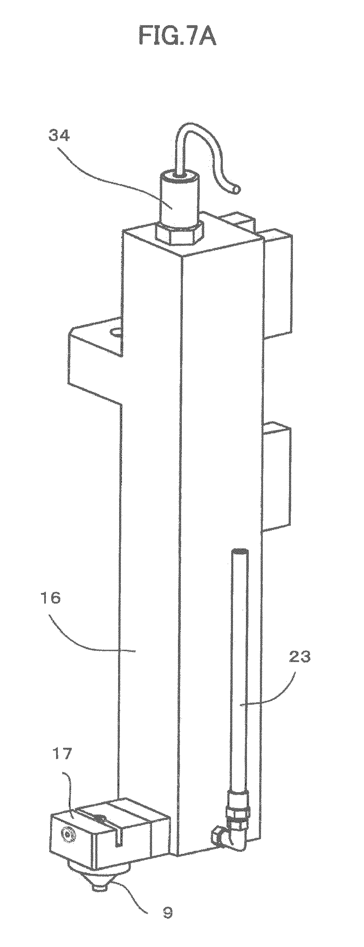

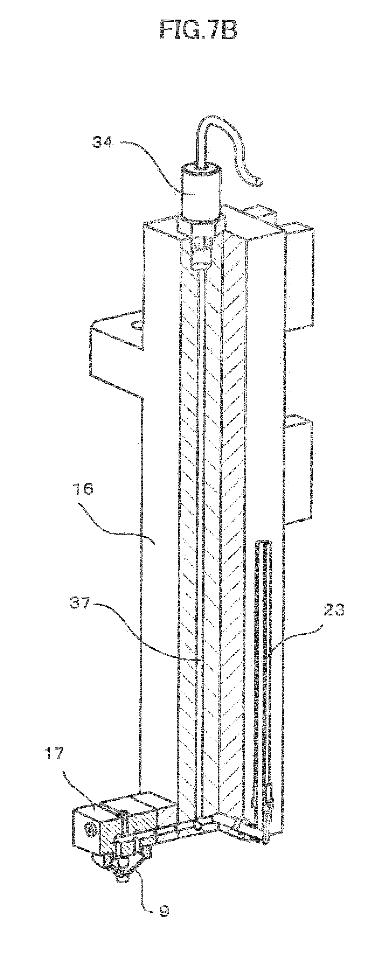

FIG. 7A is a view illustrating an embodiment in which an upper head support portion 16 is provided directly with a duct capable of transmitting the pressure of a working fluid and a pressure sensor is attached to the upper head support portion 16. FIG. 7B is a sectional view corresponding to FIG. 7A and illustrating the duct capable of transmitting the working fluid pressure.

In this embodiment, the duct for transmitting the working fluid pressure is connected to a working fluid passage 20 in the upper head support portion 16, which is located slightly apart from the upper nozzle 9, without using the tube 31 as the duct. Thus, the upper head support portion 16 is provided directly with the duct for transmitting the working fluid pressure.

Since the position of connection between the working fluid passage 20 and a duct 37 provided directly on the upper head support portion is located slightly apart from the upper nozzle 9, as shown in FIG. 7B, the measurement accuracy for the working fluid pressure in the upper nozzle 9 to be measured is somewhat reduced. If the duct is provided directly in the machine, however, the working fluid pressure can be easily measured without using an additional member, such as a joint or tube.

Alternatively, a joint (not shown) may be connected in place of the pressure sensor 34 shown in FIGS. 7A and 7B, and a tube (not shown) may be provided extending from the joint, as shown in FIGS. 6A to 6C. Further, a pressure sensor (not shown) may be installed on the distal end of the tube so that the working fluid pressure in the upper nozzle 9 can be detected by the pressure sensor.

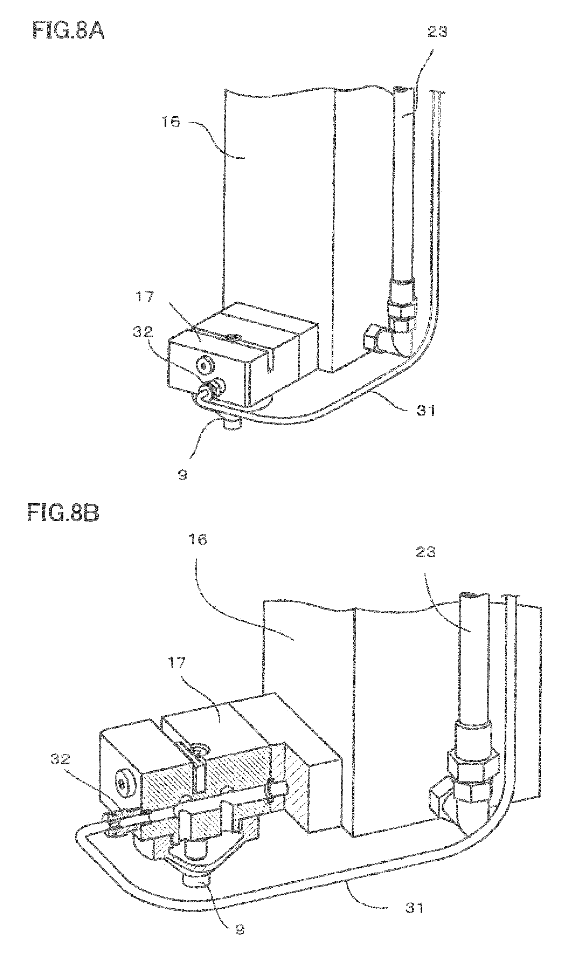

FIG. 8A is a view illustrating an embodiment in which a duct capable of transmitting a fluid pressure is connected to an upper nozzle mounting portion 17 at an upper head section 6. FIG. 8B is a sectional view of the upper nozzle mounting portion shown in FIG. 8A.

In the embodiment shown in FIGS. 8A and 8B, the duct capable of transmitting the working fluid pressure is connected to the upper nozzle mounting portion 17 in the upper head section 6. In this embodiment, unlike the embodiment of FIGS. 6A to 6C in which the joint 32 is connected to the upper nozzle 9, a joint 32 is connected to the upper nozzle mounting portion 17. In many of conventional wire electric discharge machines, the nozzles are consumables and must be frequently detached for replacement. For the sake of measurement accuracy, it is the most effective to connect the tube 31 to the upper nozzle 9, as shown in FIGS. 6A to 6C, although it is not convenient for practical use. For making the measurement accuracy for the working fluid pressure and the convenience of practical use compatible, therefore, it is effective to provide the duct in a member that is detached less frequently than the upper nozzle 9 and locate it as close to the upper nozzle 9 as possible, as in the embodiment shown in FIGS. 8A and 8B.

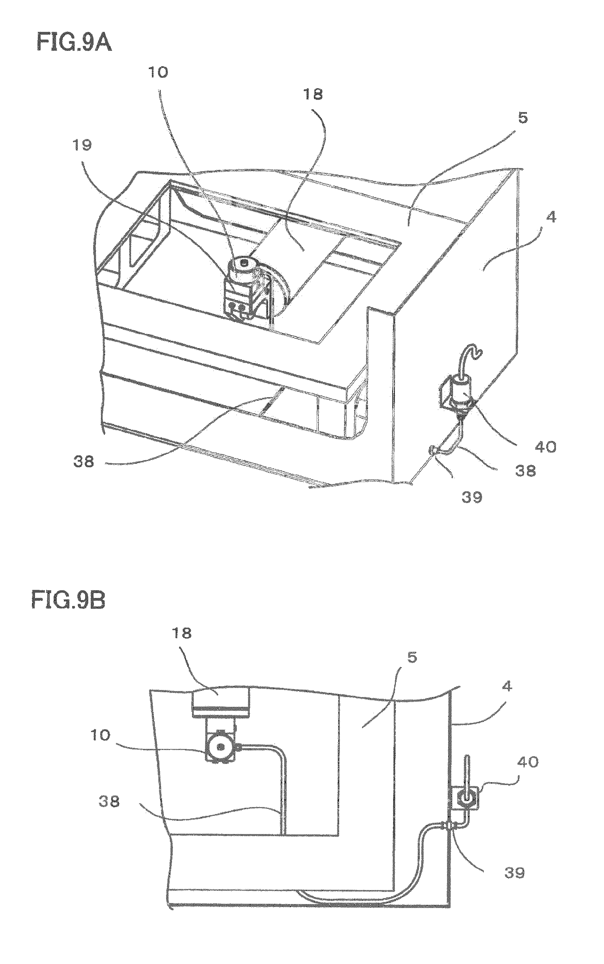

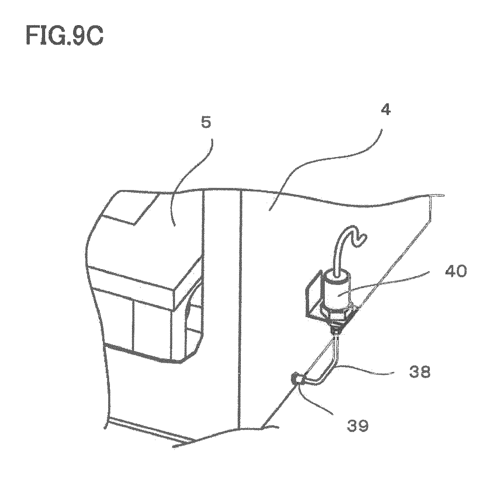

FIG. 9A is a view illustrating an embodiment in which a duct capable of transmitting a fluid pressure is connected to a lower nozzle 10 in a lower head section 7. FIG. 9B is a top view of the lower head section 7 shown in FIG. 9A. FIG. 9C is an enlarged view of a pressure sensor mounting portion shown in FIG. 9A.

FIGS. 9A to 9C show an example in which the pressure of a working fluid ejected from the lower nozzle 10 in the lower head section 7 is measured. In the example of FIGS. 9A to 9C, a joint 39 is attached to the wall of a working fluid tank 4 so as to penetrate the wall, in order to lead a tube 38 extending from the lower nozzle 10 to the outside of the working fluid tank 4, and a pressure sensor 40 is installed outside the wall of the working fluid tank 4. Thus, the pressure sensor 40 is installed on a side portion of the working fluid tank 4. Alternatively, the tube 38 led out of the working fluid tank 4 may be extended and disposed side by side with the pressure sensor 34 for measuring the pressure of the working fluid ejected from the upper nozzle 9 in the upper head section 6. Since the pressure sensor 40 is installed outside the working fluid tank 4 in this embodiment, it can be prevented from being splashed with the working fluid.

Thus, in order to accurately measure the pressure of the working fluid ejected from the upper and lower nozzles 9 and 10, which is required in machining by means of the wire electric discharge machine 1, the position of detection of the working fluid pressure is separated from the position of installation of the pressure sensor 34. In this way, the pressure sensor 34 can be made less susceptible to noise due to electric discharge and can avoid being splashed with the working fluid. Consequently, there can be provided the high-performance, low-priced wire electric discharge machine 1.

## Claims

1. A wire electric discharge machine, in which a wire electrode is stretched between an upper head section supported by an upper head support portion and a lower head section supported by a lower head support portion and serves to machine a workpiece, the wire electric discharge machine comprising:
a working fluid tank for storing a working fluid or preventing the working fluid from scattering;
a pump configured to force the working fluid into the working fluid tank;
a working fluid passage extending between an outlet of the pump and an outlet of a nozzle for ejecting the working fluid;
a fluid pressure transmission duct capable of transmitting a fluid pressure;
a connection port which connects the working fluid passage and the fluid pressure transmission duct and which is provided at the upper head section, the lower head section, the upper head support portion, or the lower head support portion; and
a pressure sensor attached, outside the working fluid tank, to one end of the fluid pressure transmission duct, the other end of which is connected to the connection port.

2. The wire electric discharge machine according to claim 1, wherein
each of the upper and lower head sections comprises a wire guide portion supporting the wire electrode, a nozzle portion for ejecting the working fluid, a conductor portion configured to supply electricity to the wire electrode, and a working fluid duct portion for supplying the working fluid to the nozzle portion,
the upper head support portion comprises a member configured to move in the same direction as the upper head section as the upper head section is moved in a direction in which the wire electrode is stretched, and
the lower head support portion comprises a member which is disposed extending from outside the working fluid tank to the lower head section in order to move the lower head section relative to the workpiece.
